# EUROPÄISCHE PATENTANMELDUNG

(11) **EP 1 159 869 A1**
(43) Veröffentlichungstag der Anmeldung: **05.12.2001**
(21) Anmeldenummer: 01107535.5
(22) Anmeldetag: 27.03.2001
(51) Int. Cl.: A01F 15/00, A01D 41/04, A01D 41/10, A01D 90/00

(54) **Landwirtschaftliches Gelenkerntefahrzeug**

(30) Priorität: 29.05.2000 DE 10026434
(71) Anmelder: Maschinenfabrik Bernard Krone GmbH, 48480 Spelle (DE)
(72) Erfinder: Krone, Bernhard, Dr.-Ing. E.h., 48480 Spelle (DE)
(74) Vertreter: Busse & Busse Patentanwälte

(57) **Zusammenfassung**

Die Erfindung bezieht sich auf ein landwirtschaftliches Erntefahrzeug 1, mit einer von einem motorischen Antrieb, einem Führerstand 8, sowie einer Radachse 9 mit Rädern 10 aufweisenden Triebkopf gezogenen, zumindest eine Radachse mit Rädern 6 sowie eine Aufnahmevorrichtung 5 umfassenden Erntemaschine 3, beispielsweise einer Vierkant- oder Rundballenpresse, wobei die Radachsen 9 des Triebkopfes 2 eine Vorderachse des Erntefahrzeuges 1 um eine Radachse 6 der Erntemaschine 3 eine Hinterachse des Erntefahrzeuges bilden. Um bei einem solchen Fahrzeug ein ungewolltes Überfahren des Erntegutschwades vermieden zu haben, zeichnet sich die Erntemaschine dadurch aus, daß die Radachse 9 des Triebkopfes 2 gegenüber dem Triebkopf 2 ortsfest und damit unlenkbar ausgebildet ist und daß die Erntemaschine 3 mit dem Triebkopf 2 über eine Knicklenkeranordnung 11 mit einer im wesentlichen vertikal ausgerichteten, zwischen der Radachse 9 des Triebkopfes 2 und der Aufnahmevorrichtung 5 der Erntemaschine 3 sowie in der im wesentlichen vertikalen Längsmittelebene des Triebkopfes gelegenen Knicklenkerachse verbunden ist (Fig. 1)

## Beschreibung

Die Erfindung bezieht sich auf ein landwirtschaftliches Erntefahrzeug mit einer von einem einen motorischen Antrieb, einen Führerstand sowie eine Radachse mit Rädern aufweisenden Triebkopf gezogenen, zumindest eine Radachse mit Rädern sowie eine Aufnahmevorrichtung umfassende Erntemaschine, beispielsweise einer Vierkant- oder Rundballenpresse, wobei die Radachse des Triebkopfes eine Vorderachse des Erntefahrzeuges und eine Radachse der Erntemaschine eine Hinterachse des Erntefahrzeuges bilden.

Landwirtschaftliche Erntefahrzeuge der vorgenannten Art finden in der jüngeren Vergangenheit zunehmend Verbreitung, um als selbstfahrende Kompletteinheit bestimmte Ernteaufgaben, wie z.B. das Aufnehmen und Verpressen von Erntegut, bei großer Ernte- und Flächenleistung erbringen zu können. Bislang bekannte landwirtschaftliche Erntefahrzeuge haben dazu einen Triebkopf mit Führerstand, Motor und Vorderrädern, der über eine Deichselanordnung eine Erntemaschine, zum Beispiel eine Vierkantballenpresse oder eine Rundballenpresse, zieht. Über ein Lenkrand im Führerstand sind die lenkbaren Räder des Triebkopfes zu lenken, so daß diese die lenkbaren Vorderräder der Kompletteinheit, d.h. des landwirtschaftlichen Erntefahrzeuges, bilden.

Nachteilig bei diesen bekannten landwirtschaftlichen Erntefahrzeugen ist, daß bei einer Erntefahrt, bei der ein Erntegutschwad z.B. über die Pickup einer Ballenpresse aufzunehmen ist, in Kurven die gelenkte Achse des Triebkopfes den Erntegutschwad mehrfach zu überfahren hat. Des weiteren ist die Lenkgenauigkeit nur mit einem erhöhten Bedienaufwand zu erreichen, so daß Erntegutverluste unvermeidbar sind.

Es ist Aufgabe der vorliegenden Erfindung, ein landwirtschaftliches Erntefahrzeug der eingangs genannten Art dahingehend zu verbessern, daß ungewollte Schwadüberquerungen durch den Triebkopf weitestgehend zu vermeiden sind.

Zur Lösung dieser Aufgabe zeichnet sich das landwirtschaftliche Erntefahrzeug der eingangs genannten Art dadurch aus, daß die Radachse des Triebkopfes gegenüber dem Triebkopf ortsfest und damit unlenkbar ausgebildet ist und daß die Erntemaschine mit dem Triebkopf über eine Knicklenkeranordnung mit einer im wesentlichen vertikal ausgerichteten, zwischen der Radachse des Triebkopfes und der Aufnahmevorrichtung der Erntemaschine sowie in der vertikalen Längsmittelebene des Triebkopfes gelegenen Knicklenkerachse verbunden ist.

Damit ist ein landwirtschaftliches Erntefahrzeug zur Verfügung gestellt, bei der der Erntegutschwad immer, und damit auch im Verlaufe von Kurvenfahrten zwischen den Rädern des Triebkopfes gelegen ist, so daß ein ungewolltes Überqueren bei Kurvenfahrten nicht mehr notwendig ist. Die Knicklenkerachse im Bereich hinter den Rädern des Triebkopfes und damit hinter den Vorderrädern des Erntefahrzeuges, jedoch vor der Aufnahmevorrichtung der gezogenen Erntemaschine liegt mithin auch im wesentlichen in der Mitte des aufzunehmenden Schwades, so daß auch die Bedienperson der Lage des Schwades folgen kann und ohne das Erfordernis aufwendiger Lenk- und Kontrollarbeiten der Erntegutschwad zentral der Aufnahmevorrichtung zugeführt werden kann.

Die Lenkung erfolgt dabei nicht, wie bei herkömmlichen Triebköpfen über gelenkte Räder des Triebkopfes, sondern über Stellglieder, die die Erntemaschine in Relation zum Triebkopf während der Fahrt verschwenken, so daß dadurch die unterschiedlichen Lenkstellungen des Fahrzeuges eingenommen werden. Da die Stellglieder diese Lenkverstellbewegungen nach den Rädern des Triebkopfes und vor der Aufnahmevorrichtung durchführen, ist die unmittelbare Zuordnung von Lenkbewegungen und Aufnahme des Erntegutschwades zu vollziehen.

Bevorzugtermaßen sind die Stellglieder als hydraulisch oder pneumatisch betätigbare Stellzylinder ausgebildet, die miteinander hydraulisch bzw. pneumatisch gekoppelt sind, so daß bei einer Ausfahrbewegung des einen Stellzylinders der andere Stellzylinder synchron eingefahren wird, je nach dem, wie es die Lenkbewegung erfordert.

Nach einer besonderen Weiterbildung der Erfindung sind dabei Anschlußverbindungsgelenkstellen für die Erntemaschine vorgesehen, die sich einmal unterhalb der Stellglieder - bezogen auf eine horizontale Ebene - befinden, und einmal oberhalb dieser Stellglieder, so daß die im wesentlichen vertikal ausgerichtete Knicklenkerachse durch zwei Knickgelenkstellen geht.

Als Gelenke sind dabei bevorzugtermaßen Knickpendelgelenke vorgesehen, so daß Bewegungen in unterschiedlichen Freiheitsgraden ermöglicht sind. Dadurch kann die gezogene Erntemaschine auch z.B. bei Unebenheiten einer zu überfahrenden Fläche Relativbewegungen durchführen und in einem gewissen Grade um die zur Fahrzeugrichtung hin parallel ausgerichtete Fahrzeuglängsachse verschwenken bzw. pendeln.

Um dabei auch begrenzte Pendel- bzw. Schwenkbewegungen gewährleistet zu haben, ist bevorzugterweise ein Längslenkerteil vorgesehen, das einerseits am Triebkopf an der oberen Anschlußgelenkstelle über ein Knickpendelgelenk mit dem Triebkopf verbunden ist und anderenends über ebenfalls ein Knickpendelgelenk mit der Erntemaschine verbunden ist, und zwar auch wiederum oberhalb der Stellglieder. Bevorzugtermaßen ist dieses Längslenkerteil von einem Anschlag umgrenzt, der zweckmäßigerweise nach Art eines U bzw. einer Brücke das Längslenkerteil überspannt. Dadurch sind im gewissen Maße Pendelbewegungen möglich, jedoch mit Begrenzung der Pendelbewegbarkeit.

Weitere wesentliche Ausgestaltungen ergeben sich aus weiteren Unteransprüchen, der nachfolgenden Beschreibung und der Zeichnung. In der Zeichnung zeigen:
- Fig. 1: in einer schematischen Seitenansicht ein Ausführungsbeispiel einer Erntemaschine der Erfindung mit einer gezogenen Rundballenpresse als Erntemaschine;

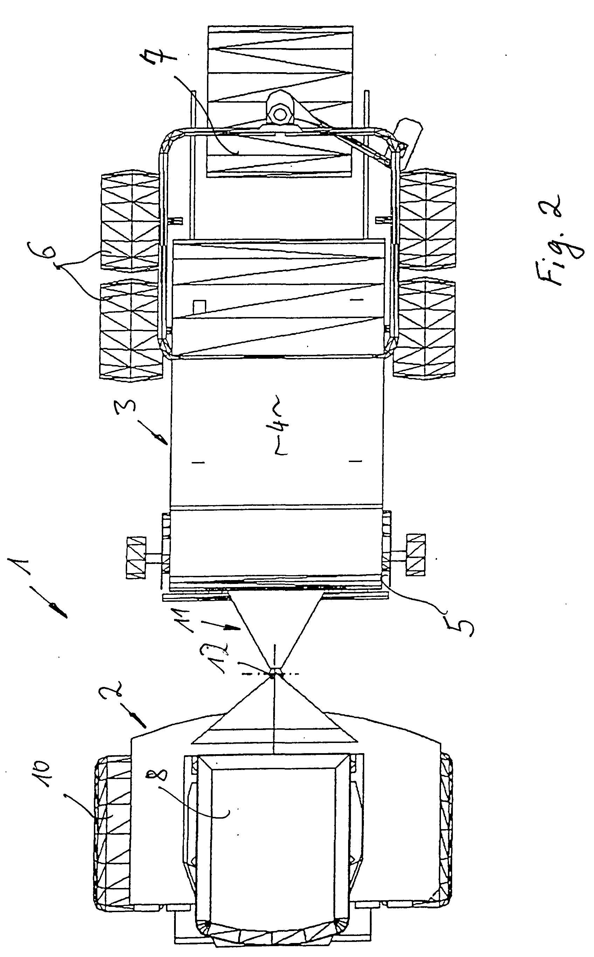

- Fig. 2: eine Draufsicht auf das Ausführungsbeispiel nach Fig. 2;
- Fig. 3: ausschnittsweise ein Ausführungsbeispiel einer Knicklenkeranordnung eines Erntefahrzeuges nach der Erfindung;
- Fig. 4: eine Draufsicht auf das Ausführungsbeispiel nach Fig. 3;
- Fig. 5: eine Seitenansicht auf das Ausführungsbeispiel nach der Fig 3,
- Fig. 6a u. 6b: eine Darstellung eines Erntefahrzeuges nach dem Stand der Technik während der Erntefahrt und
- Fig. 7a u. 7b: zu Fig. 6a und 6b analoge Darstellungen eines Erntefahrzeuges nach der Erfindung während der Erntefahrt.

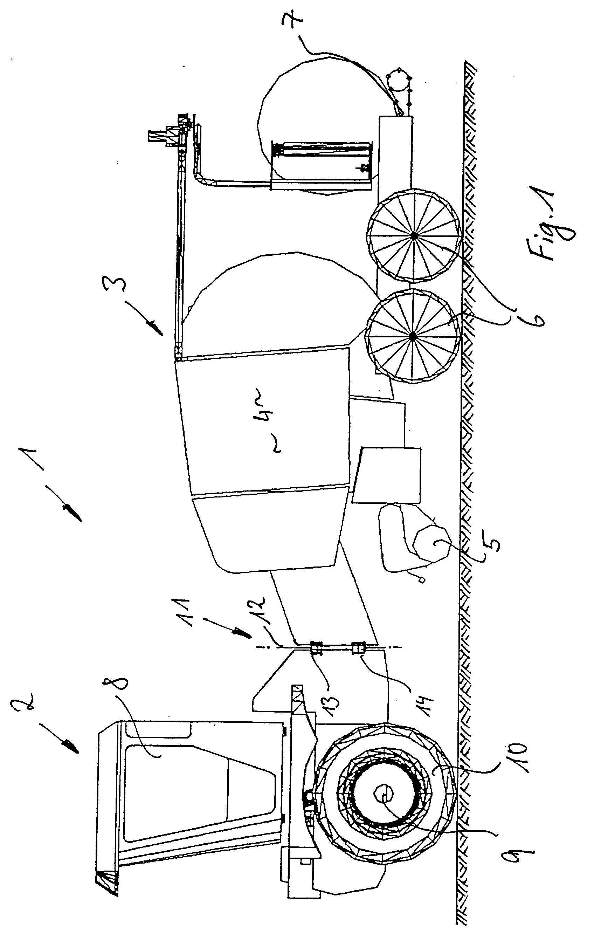

In der Zeichnung sind grundsätzlich gleichwirkende Teile mit gleichen Bezugsziffern versehen. In Fig. 1 ist allgemein ein mit 1 beziffertes landwirtschaftliches Erntefahrzeug gezeigt, das aus einem Triebkopf 2 und einer Erntemaschine 3 besteht, welche in dem gezeigten Ausführungsbeispiel als Rundballenpresse 4 mit einer als Pickup ausgebildeten Aufnahmevorrichtung 5, einer Tandemachse 6 und einem Wickelgerät 7 ausgebildet ist.

Der Triebkopf 2 hat einen Führerstand 8, in dem alle Bedienelemente wie Lenkrad und dgl. untergebracht sind. Der Triebkopf hat eine Achse 9 mit Rädern 10. Die Achse 9 mit Rädern 10 bildet die Vorderachse des Erntefahrzeuges und ist - bezogen auf den Triebkopf - ortsfest vorgesehen und damit nicht lenkbar ausgebildet.

Über eine allgemein mit 11 bezifferte Knicklenkeranordnung ist die Erntemaschine 3 mit dem Triebkopf verbunden, so daß dort eine Knicklenkerachse 12 vorgesehen ist, die zwei Anschlußgelenkstellen 13 und 14 schneidet und zwischen der Vorderachse des Triebkopfes 2 und der Aufnahmevorrichtung 5 der Erntemaschine 3 gelegen ist.

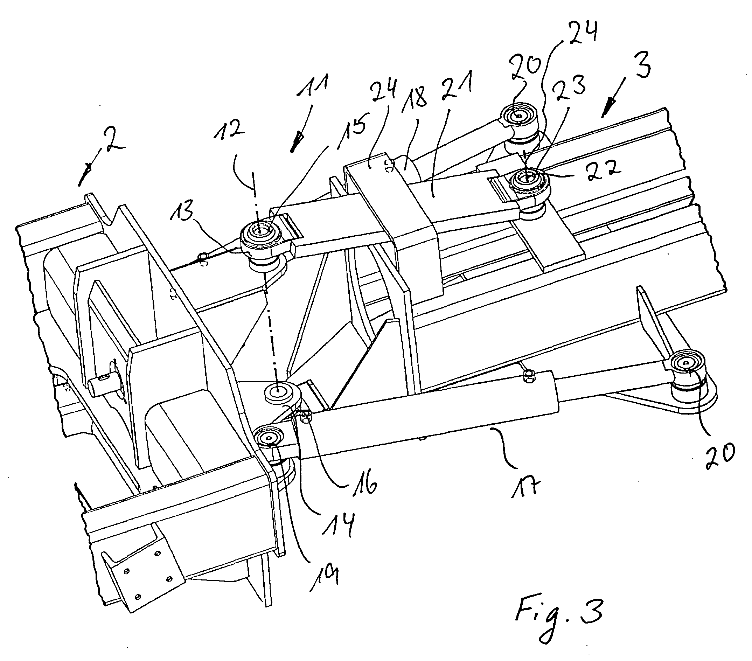

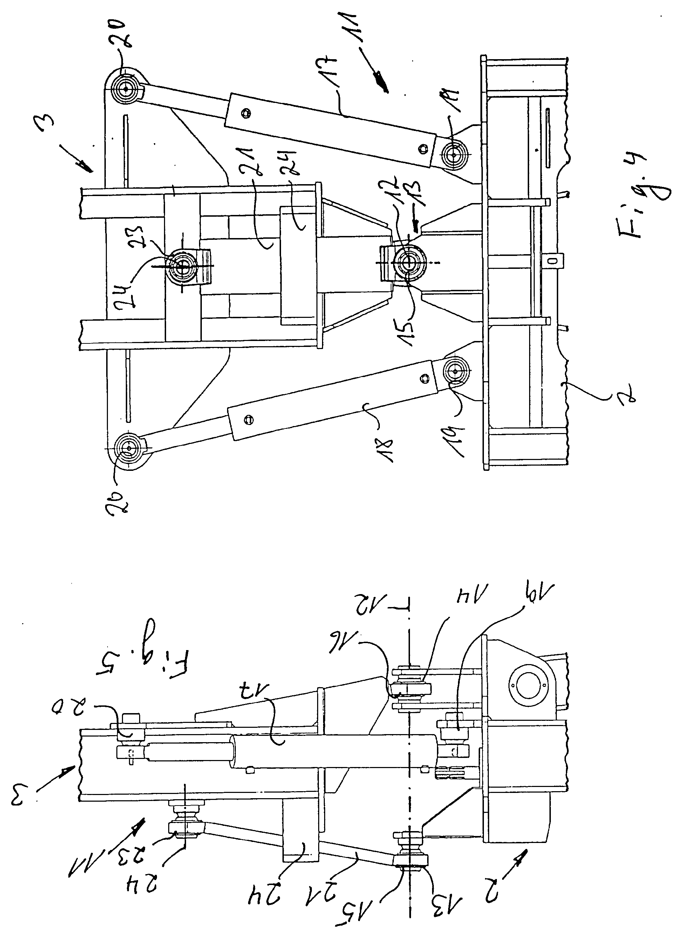

Wie im einzelnen näher aus den Fig. 3 bis 5 hervorgeht, in denen vergrößert die Knicklenkeranordnung 11 mit Knicklenkerachse 12 und Anschlußverbindungsstellen 13 und 14 gezeigt ist, ist die Erntemaschine 3 bei den beiden Anschlußgelenkstellen 13 und 14 über Knickpendelgelenke 15 und 16 mit dem Triebknopf 2 verbunden. Diese Knickpendelgelenke lassen auch mehrere Freiheitsgrade bei der Bewegung zu, so daß die Erntemaschine auch um die vertikale Längsmittelebene pendelbar ist.

Gelenkt wird das Gesamtfahrzeug über als Hydraulikzylinder ausgebildete Stellglieder 17 und 18, die bei den Gelenkstellen 19 mit dem Triebknopf und bei den Gelenkstellen mit der Erntemaschine verbunden sind. Diese beiden Hydraulikzylinder 17 und 18 sind hydraulisch gekoppelt und werden aktiviert über Lenkbewegungen an einem Lenkrad in dem Führerstand 8 des Triebkopfes 2. Die Verbindung an der Gelenkstelle 13 erfolgt über ein Längslenkerteil 21, das bei 22 ebenfalls über ein Pendelgelenk 23 mit der Erntemaschine 3 verbunden ist. Dieses Längslenkerteil wird überspannt von einem U-förmigen Anschlagteil 24, das Pendelbewegungen der Erntemaschine begrenzt. Die Gelenkachse des Pendelgelenkes 23 ist in der Zeichnung mit 24 beziffert.

Ein Vergleich eines bekannten Erntefahrzeugs mit dem Erntefahrzeug nach der Erfindung macht deutlich, daß mit dem Erntefahrzeug nach der Erfindung einen Erntegutschwad nicht mehr zu überfahren ist und der Erntegutschwad exakt an die Erntemaschine übergeben werden kann.

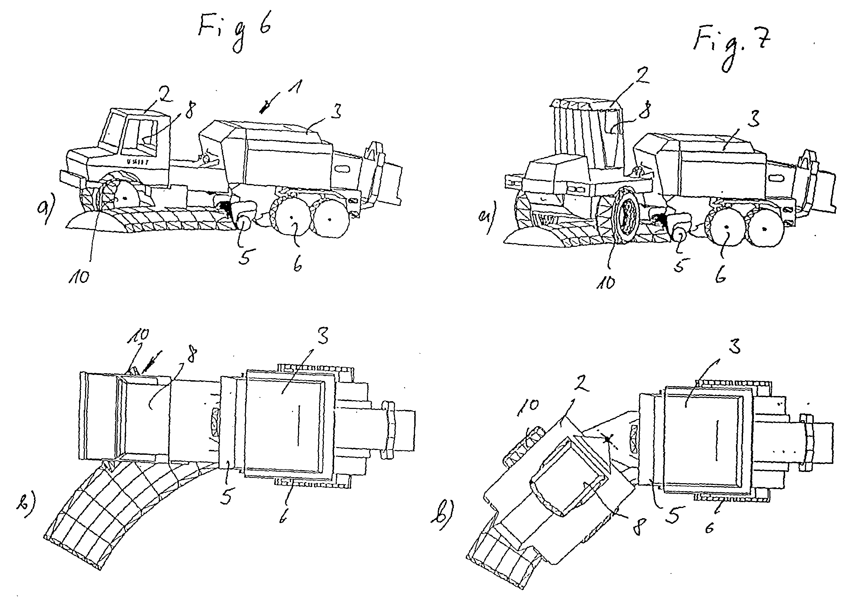

In den Darstellungen nach den Fig. 6a und 6b ist ein herkömmliches Erntefahrzeug mit gelenkten Vorderrädern des Triebkopfes dargestellt, mit einer Erntemaschine in Gestalt einer Vierkantpresse mit Tandemachse und Wickelgerät. Wie aus der Seitendarstellung nach Fig. 6a und der Draufsicht nach Fig. 6b ersichtlich ist, während der Kurvenfahrt für eine Aufnahme des Erntegutschwades der Gutschwad zu überfahren, und zwar mehrfach, wobei die Bedienperson sowohl die Vorderräder als auch die Aufnahmevorrichtung im Auge behalten muß, um die Vorderräder in Lenkpositionen zu bringen, wie es die Aufnahme des Erntegutschwades erfordert.

Bei ansonsten übereinstimmender Darstellung ist aus den Fig. 7a und 7b ersichtlich, daß die Bedienperson dieser Erntemaschine den Erntegutschwad lediglich zwischen die Vorderräder, die ungelenkt sind, nehmen muß, da aufgrund der Lage der Knicklenkerachse die nachgeordnete Erntemaschine den Erntegutschwad zentral und exakt aufnimmt, ohne daß es besonderer Lenkarbeiten und ein Überfahren des Erntegutschwades bedarf.

## Patentansprüche

1. Landwirtschaftliches Erntefahrzeug (1) mit einer von einem einen motorischen Antrieb, einen Führerstand (8), sowie eine Radachse (9) mit Rädern (10) aufweisenden Triebkopf (2) gezogenen, zumindest eine Radachse mit Rädern (6) sowie eine Aufnahmevorrichtung (5) umfassenden Erntemaschine (3), beispielsweise einer Vierkant- oder Rundballenpresse, wobei die Radachse (9) des Triebkopfes (2) eine Vorderachse des Erntefahrzeuges (1) und eine Radachse (6) der Erntemaschine (3) eine Hinterachse des Erntefahrzeuges (1) bilden, **dadurch gekennzeichnet, daß** die Radachse (9) des Triebkopfes (2) gegenüber dem Triebkopf (2) ortsfest und damit unlenkbar ausgebildet ist und daß die Erntemaschine (3) mit dem Triebkopf (2) über eine Knicklenkeranordnung (11) mit einer im wesentlichen vertikal ausgerichteten, zwischen der Radachse (9) des Triebkopfes (2) und der Aufnahmevorrichtung (5) der Erntemaschine (3) sowie in der im wesentlichen vertikalen Längsmittelbe des Triebkopfes (2) gelegenen Knicklenkerachse (12) verbunden ist.

2. Landwirtschaftliches Erntefahrzeug nach Anspruch 1, **dadurch gekennzeichnet, daß** die Erntemaschine (3) über Stellglieder (17,18) in Lenkstellungen des Erntefahrzeuges (1) überführbar ist.

3. Landwirtschaftliches Erntefahrzeug nach Anspruch 2, **dadurch gekennzeichnet, daß** die Stellglieder (17,18) als hydraulisch oder pneumatisch betätigbare Stellzylinder ausgebildet sind.

4. Landwirtschaftliches Erntefahrzeug nach Anspruch 3, **dadurch gekennzeichnet, daß** die hydraulisch oder pneumatisch betätigbaren Stellzylinder hydraulisch gekoppelt sind.

5. Landwirtschaftliches Erntefahrzeug nach einem der Ansprüche 1 bis 4, **dadurch gekennzeichnet, daß** die Erntemaschine (2) mit dem Triebkopf (2) über zumindest ein Knickpendelgelenk (15,16) verbunden ist.

6. Landwirtschaftliches Erntefahrzeug nach einem der Ansprüche 1 bis 5, **dadurch gekennzeichnet, daß** die Erntemaschine (2) mit dem Triebkopf (2) über zwei Knickpendelgelenke (15,16) verbunden ist.

7. Landwirtschaftliches Erntefahrzeug nach einem der Ansprüche 1 bis 6, **dadurch gekennzeichnet, daß** die Erntemaschine (3) an zwei Anschlußgelenkstellen (13,14) mit dem Triebkopf (2) verbunden ist und eine Anschlußgelenkstelle (13) ein Längslenkerteil (13) aufweist, das erntemaschinenseitig mit der Erntemaschine (3) über ein Pendelgelenk (23) verbunden ist.

8. Landwirtschaftliches Erntefahrzeug nach Anspruch 7, **dadurch gekennzeichnet, daß** dem Längslenkerteil (21) ein erntemaschinenseitiger Anschlag (24) zugeordnet ist.

9. Landwirtschaftliches Erntefahrzeug nach Anspruch 8, **dadurch gekennzeichnet, daß** der erntemaschinenseitige Anschlag (24) im wesentlichen U-förmig ausgebildet ist und das Längslenkerteil (21) seitlich und oberhalb umgrenzt.

10. Landwirtschaftliches Erntefahrzeug nach einem der Ansprüche 1 bis 9, **dadurch gekennzeichnet, daß** die Erntemaschine (3) einem Ernteverarbeitungsraum nachgeordnete Erntegutbehandlungsstationen wie z.B. ein Wickelgerät (7) aufweist.
